Europäisches Patentamt

European Patent Office

Office européen des brevets

(19)

(11) Publication number: **0 120 851**
**B1**

(12) **EUROPEAN PATENT SPECIFICATION**

(45) Date of publication of patent specification: **16.06.87**

(51) Int. Cl.⁴: **C 04 B 35/58**

(21) Application number: **82903516.1**

(22) Date of filing: **30.09.82**

(86) International application number:
**PCT/US82/01383**

(87) International publication number:
**WO 84/01374 12.04.84 Gazette 84/10**

(54) METHOD OF IMPROVING QUALITY OF HOT PRESSED Si3N4 BODIES.

(43) Date of publication of application:
**10.10.84 Bulletin 84/41**

(45) Publication of the grant of the patent:
**16.06.87 Bulletin 87/25**

(84) Designated Contracting States:
**DE GB SE**

(56) References cited:
**US-A-2 883 312**
**US-A-3 467 745**
**US-A-4 076 779**
**US-A-4 177 235**
**US-A-4 238 434**
**US-A-4 264 548**

(73) Proprietor: **Ford Motor Company**
**The American Road**
**Dearborn, MI 48121 (US)**
(84) **SE**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(72) Inventor: **BECKWITH, Elaine, C.**
**13716 Hamilton**
**Riverview, MI 48192 (US)**
Inventor: **EZIS, Andre**
**23235 West River Road**
**Grosse Ile, MI 48138 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

Silicon metal powders, used as a starting material for manufacturing silicon nitride ceramics, typically contain impurities and/or contaminants (such as iron oxide, CaO, NiO, $Cr_2O_3$, MnO, $Li_2O_2$ that are useful and, in some cases, generally required to promote efficient nitriding. However, the presence of such impurities in the final ceramic product may be detrimental to the development of optimum physical properties. The impurities can produce random flaws which lower the strength of the material and other related properties. The impurities in the nitrided silicon nitride body typically comprise iron, iron oxide, free silicon, and unreacted $Y_2O_3$, all of which can form silicides, silicates, or other compounds detrimental to optimum physical properties. The presence of unreacted $Y_2O_3$ is undesirable because it changes the desired $Y_2O_3/SiO_2$ ratio and affects the distribution of $Y_2O_3$ in the final hot pressed product. The formation of silicides from such impurities is particularly detrimental because during hot pressing $Si_3N_4$ is readily dissolved in the silicide solute and precipitates as large grained beta $Si_3N_4$ to define local pockets of silicide, large grains and porosity. These pockets are weak spots of flaws in the material when used as a cutting tool. This also produces a concentration of yttria which affects development of desirable oxynitrides as suitable crystalline binders.

UK Patent 1340696 discloses a method of manufacturing silicon nitride products comprising the steps of forming a compact of silicon and a fluxing agent which compact has density between 1.1 and 1.7 $g/cm^3$, heating the compact in a nitriding atmosphere to produce a silicon nitride body and hot pressing the silicon body to produce a silicon nitride product.

It would be desirable if some mode were available that obviated the need for purifying the starting materials and permitted the impurities to serve a useful function during nitriding and other related steps. Such mode would eliminate the impurities at a stage of the process so that they would not be present in the final product after they have served their useful fabricating function. In this manner the impurities would not be available to promote oxidation or cracking in the final product.

According to the present invention there is provided a method of making silicon nitride products which comprises forming a preform by compacting a mixture of unpurified silicon powder and oxygen carrying agents and heating the preform in a nitrogen based atmosphere to react the ingredients thereof to form an at least partially nitrided billet having a density no greater than 2.7 $g/cm^3$, characterised by immersing said billet in one or more stages in one or more leaching solutions of effective concentration to remove selected impurities, and thereafter heating said billet to a heat fusing condition to form a unitary, substantially fully dense, silicon nitride product.

Further according to the invention there is provided a method of making a heat fused silicon nitride product wherein (i) a powder mixture of unpurified silicon and oxygen carrying agents is compacted, (ii) the compact is heated in a nitrogen based atmosphere to react the ingredients of said compact to form a silicon nitride comprising billet having a density of up to 1.4 $g/cm^3$, and (iii) heating the billet to a temperature to heat fuse the particles of said billet to form a product having a density of no greater than 2.7 $g/cm^3$, the improvement comprising immersing said billet or compact in one or more leaching solutions prior to step (iii), said immersion in said leaching solutions being for a period of time sufficient to dissolve and separate out impurities present in said billet or compact.

It is advantageous to use a base solution to leach out free silicon and acid solution to leach out Fe and $Fe_2O_3$. It is of course desirable that the base solution be used only after the preform has been nitrided.

It is preferable if the silicon powder has a purity of at least 97%, preferably above 98%. The oxygen carrying agents are selected from the group consisting of $SiO_2$, $Y_2O_3$, $Al_2O_3$ MgO, $CeO_2$, $ZrO_2$, $HfO_2$, and other rare earth oxides. It is preferable to use $Y_2O_3$ and $Al_2O_3$, each having a respective purity of greater than 99.99% and 99.5%. Trace metals contained in $Y_2O_3$ includes Ca, Cr, Fe, Mn and rare earths. Impurities in the $Al_2O_3$ usually are $SiO_2$, $Fe_2O_3$, and $Na_2O$. The trace metals and $Fe_2O_3$ serve as nitriding aids because they tend to break up the oxide film covering silicon powder during nitriding. The $SiO_2$ impurity is helpful to obtain the right nitrided phases.

Advantageously, impurity removal is carried out after full nitriding, although it can be carried out on the preform after partial nitriding or presintering, as long as either preform of the billet has a density no greater than 82% of full theoretical (2.7 $g/cm^3$). The preferred leaching solution is an aqueous solution of hydrochloric acid in a concentration of 7 molar. However, a second aqueous solution of sodium hydroxide, KOH, or its equivalent, in a concentration of 5 molar, may separately and additionally be employed to remove other selected impurities such as free silicon. The leaching solutions are used at a temperature usually at room conditions, and the billet or preform is immersed therein for a period of preferably 6—48 hours or preferably in accordance with a visual test determined by the degree of yellow color attained in the solution ($FeCl_3$). It is important to point out that after each leaching immersion, the billet or preform is preferably rinsed in deionized water for a few minutes to remove residual ions. For acids, a silver nitrate test may be employed to inspect the preform or billet to determine the degree of removal of residual ions. Other known tests may be employed for the reaction products of the base solution.

The invention will now be further described by way of example with reference to the accompanying drawings in which:

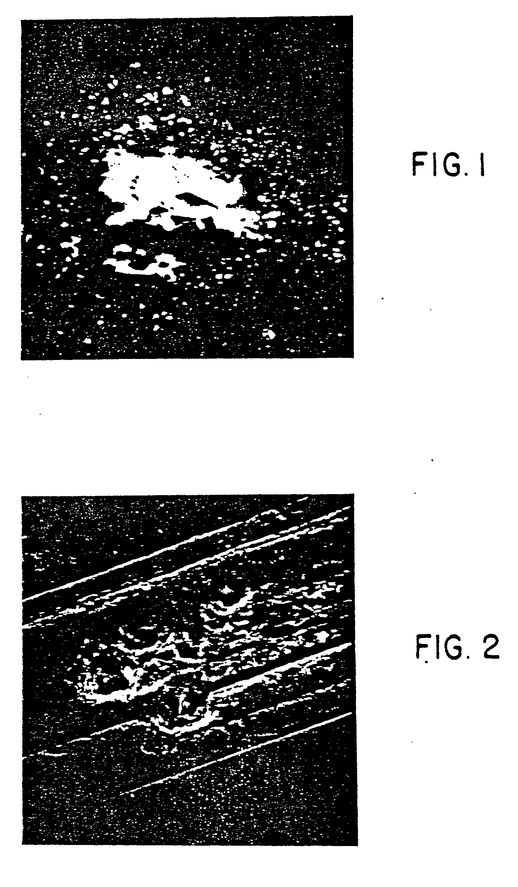

Figure 1 is a photograph of a portion of a hot pressed silicon nitride in accordance with the

previous art (at 1000× magnification) showing a large flaw comprised of iron silicide; and

Figure 2 is a photograph of a portion of a cut surface of a silicon nitride billet (at 3000× magnification) made from the material of Figure 1 showing the space left by the dislodgement of an iron silicide pocket and exposing extra large grains of beta silicon nitride associated with the silicide during crystallization.

A preferred method for carrying out the invention herein is as follows.

1. A preform of starting ingredients is formed by compacting a mixture of silicon powder carrying oxide as a surface coating thereon, and oxygen carrying powder agents selected from the group consisting of $SiO_2$, $Y_2O_3$, $Al_2O_3$, $MgO$, $CeO_2$, $ZrO_2$, $HfO_2$, and other rare earth oxides. Reactive oxygen carrying agents is defined herein to mean ingredients that are effective to form second phase crystallites, particularly oxynitrides, when reacted with the silicon powder under a heated nitrogen atmosphere. Use of these agents will improve physical characteristics and formation of a second phase crystallite which (a) will uniformly be dispersed, and (b) substantially displace the detrimental glassy silicate phase normally formed except for a controlled and limited amount of the latter.

For purposes of the preferred method, a uniform powder mixture is prepared with 2000 grams of silicon (86.6 weight percent of mixture), 278 grams $Y_2O_3$ (12 weight percent of mixture and 13.9% of silicon), and 32 grams $Al_2O_3$ (1.4 weight percent of mixture and 1.6% of silicon). $Y_2O_3$ is normally used in the range of 3—19% by weight of the silicon. The oxygen carrying agent, such as $Al_2O_3$, is used in the range of 0.4—5% by weight of the silicon. $SiO_2$ is present usually as an oxide on the silicon powder and increased to 1—3% by weight of the silicon by milling.

The silicon powder is preferably selected to have 98% or greater purity and a starting average particle size of 8—9.2 microns (µm). The major trace metal contaminants experienced with such impurity include, as maximums: iron up to 1.0%, aluminum up to 0.5%, and manganese up to 0.09%. Nonmetallic contaminants include, as maximums: carbon up to 0.05% and oxygen less than 0.5%. The $Y_2O_3$ powder is selected to have a purity of at least 99.99% with an average crystallite size of 0.0438 microns (438Å). Alumina is selected to have a purity of at least 99.5% with an average particle size of 0.3—0.5 microns. The yttria typically carries trace contaminants of Ca (3.4 ppm (parts per million)), Cr (<10 ppm), Fe (0.2 ppm) Mn (<6 ppm), and other rare earths. Alumina typically carries, as maximums: $SiO_2$(0.07% by weight), $Fe_2O_3$ (0.03%), and $Na_2O$ (0.08%).

The mixture is comminuted and blended by being charged into an inert milling jar along with grinding media in the form of Burundum® cylinders (85% $Al_2O_3$, 11% $SiO_2$, 2% MgO, 1.2% CaO), and less than 0.1% of ($TiO_2$, $Fe_2O_3$, $Na_2O$). The milling media adds $Al_2O_3$ to the mixture by attrition. The mixture is milled for 48 hours at 64 rpm, and then separated from the media. The milling is preferably dry to eliminate further introduction of impurities. The oxygen carrying agents must be in the reactive form with a high surface area and small crystal-line size. The resulting milled mixture will have at least 50% by weight with an average particle size of about 3 microns, and 90% with an average particle size less than 23 microns. The surface oxide level after milling ($SiO_2$) will be increased to 1.6% by weight of the silicon and be present as an oxide coating in an amount of 3.0 weight percent. The oxide coating preferably never be stripped off. Preferably, the $Y_2O_3$/$SiO_2$ ratio is controlled to be in the range of 1.1—6.4 and optimally about 4.

A measured quantity of milled mixture is loaded into a cold pressed die arrangement and pressed at ambient conditions by use of $9.65 \times 10^3$/—$10.3 \times 10^3$ kPa (1400—1500 psi) to form a preform of a size of about 15.24 cm by 1.524 cm (6″ by 0.6″) and a density of 1.5—2.7 g/cm³. The density is typically in the range of 42—82% of full theoretical and optimally around 60% of theoretical.

2. Heating to Nitride

The preform is heated in a nitriding atmosphere, without the use of pressure normally associated with hot pressing, to produce a silicon nitride comprising body consisting of $Si_3N_4$, at least one dispersed second phase crystallite, 0.2—1% silicate, and up to 1.0% by weight of free silicon and unreacted oxygen carrying agents, such as $Y_2O_3$ and $Al_2O_3$. The body will have a size greater than a density less than the ultimate object to be formed.

To carry out heating to nitride, the preform is placed in an enclosed furnace, preferably evacuated to a pressure of less than 1 micron (1.333 µbar), and heated at a fast rate, i.e., 500°F/hr. (278°C/hr.) to 1200°F (649°C). The furnace is then filled with a gaseous mixture consisting of 72% by volume nitrogen, 3% hydrogen, and 25% helium, at a pressure of about 18.6 kPa (2.7 psig). The total $O_2$ and $H_2O$ content in such gaseous mixture is less than 4 ppm. The temperature of the furnace is then increased in steps to a nitriding temperature of 2000—2600°F (1093—1427°C). Fresh nitrogen is intermittently supplied to the furnace to replace the nitrogen consumed in forming $Si_3N_4$ and the oxynitrides. The nitrided object is then cooled to room temperature at a rate of about 250°F/hr. (56°C/hr.

The nitrided body will preferably consist of silicon nitride (at least 60% of which is in the alpha form), 3—15% silicon oxynitride and the remainder essentially a silicate glass. There can be present up to 1.0% free silicon and unreacted $Y_2O_3$, and silicides, such as iron silicide.

3. Leaching

The nitrided billet for preform is immersed in one or more stages in one or more leaching solutions of effective concentration to remove selected impurities. Preferably, the primary leaching solution is an aqueous solution of hydrochloric acid in a concentration of 3—10 molar percent. Alternative leaching acids may comprise sulfuric acid, acetic acid, nitric acid, and oxalic acid. These acids are effective to dissolve silicides such as $Cr_3Si_2$ but not iron silicide per se. The acids do dissolve iron, iron oxide and unreacted $Y_2O_3$ which can form iron silicide during hot pressing, a time when the greatest quantities of iron silicides are formed.

The billet or preform may additionally and advantageously be immersed in a basic solution containing sodium hydroxide in a concentration of 5 molar which is effective to remove free silicon.

The billet or preform should be maintained in an immersed condition within said solutions for a period of 6—48 hours or by noting the color of the leaching solution. When it reaches a predetermined degree of yellow, for example, in connection with hydrochloric acid, the leaching effect has progressed to a satisfactory degree. Other methods by which the material can be tested to determine if leaching has proceeded to a satisfactory degree, and has subtracted the necessary amount of impurities, include: spectrophotometric techniques, plasma emission spectrometry, and atomic absorption spectrometry.

4. Heat fusing

The nitrided body is then heated to heat fusing conditions to form a unitary, substantially fully dense, silicon nitride comprising object. Preferably, the nitrided body is hot pressed to produce such an object. A pressing fixture having graphite walls is used to carry out hot pressing. The walls and nitrided body are both coated with a slurry of boron nitride and dried. The pressing fixture with the nitrided body therein is placed in the hot pressing furnace. The heating and pressing is carried out preferably in increments: (1) a mechanical loading of $0.69 \times 10^3$ kPa (100 psi) is applied at room temperature to the body; (2) the temperature is increased to 1800°F (982°C) and the pressure increased to $3.44 \times 10^3$ kPa (500 psi), (3) the temperature is then increased to 2500°F (1391°C) and pressure simultaneously increased to $17.2 \times 10^3$ kPa (2500 psi), (4) the temperature is finally increased to the hot pressing temperature of 3000°F (1649°C) and pressure increased to $2.55 \times 10^4$ kPa (3700 psi) the latter conditions being maintained until at least 99% or desirably 99.5% of theoretical full density is achieved. This usually requires 0.25—3.0 hours at the hot pressing temperature. The object is then cooled at any rate, even quenched, to room temperature.

The resulting object will consist essentially of beta silicon nitride, 1—7.5% by weight silicon oxynitrides enveloped by silicate phase having a thickness of 3—10 angstroms and having no microporosity. The object preferably possesses a hardness HR of 88.5—92.0 on the 45-N scale, a density of 3.2—3.35 grams/cm³, a fracture strength of about $5.86 \times 10^5$ kPa (85,000 psi) at 1200°C in a four-point bend test and an oxidation resistance that prevents weight pickup by the object after 450 hours in air at 1000°C. The object will notably be characterized by the absence of large beta silicon nitride and concentrations of unreacted $Y_2O_3$.

Examples

A series of cutting tools samples were prepared and tested to determine physical parameters and machining performance and to illustrate how the use of the leaching step along with the starting ingredients in an unpurified form achieved successful improvement in certain physical characteristics of the material, particularly the modulus of rupture. Sample bars of the ceramic were made using the composition and processing of the preferred mode. The material was nitrided to a density of 2.2 g/cm³ prior to leaching in the two sequential solutions. The results show that for conventional unpurified starting materials, which are not leached during processing, the resulting product will have a hardness of 90 (on 45-N scale), a modulus of rupture of $6.2 \times 10^5$ kPa (90000 psi). When the same material was subjected to leaching in accordance with the preferred mode, the hardness increased to 92 and the modulus of rupture increased to $7.93 \times 10^5$—$9.65 \times 10^5$ kPa (115000—740000 psi). The leached material had greater structural integrity for use as a cutting tool.

**Claims**

1. A method of making silicon nitride products which comprises forming a preform by compacting a mixture of unpurified silicon powder and oxygen carrying agents, and heating the preform in a nitrogen based atmosphere to react the ingredients thereof to form an at least partially nitrided billet having a density no greater than 2.7 g/cm³, characterised by immersing said billet in one or more stages in one or more leaching solutions of effective concentration to remove selected impurities, and thereafter heating said billet to a heat fusing condition to form a unitary, substantially fully dense, silicon nitride product.

2. A method as claimed in Claim 1, in which said billet includes unreacted silicon and iron as impurities and said leaching solutions are effective to remove said impurities.

3. A method as claimed in Claim 1 or 2, in which said oxygen carrying agents are selected from the group consisting of $Y_2O_3$, $Al_2O_3$, $SiO_2$, $MgO$, $CeO_2$, $ZrO_2$, $HfO_2$, and other rare earth oxides.

4. A method as claimed in any one of Claims 1 to 3, in which at least one of said leaching solutions is an aqueous solution of hydrochloric acid.

5. A method as claimed in Claim 4, in which the concentration of hydrochloric acid in said solution is in the range of 3—10 molar percent.

6. A method as claimed in Claim 1, in which said leaching solutions are selected from the group consisting of aqueous solutions of hydrochloric acid, sulfuric acid, acetic acid, oxalic acid and nitric acid.

7. A method as claimed in Claim 6, in which a second solution is additionally and separately employed containing sodium hydroxide in a concentration of 5 molar.

8. A method as claimed in any one of the preceding claims, in which the period of immersion in said leaching solution is for 6—48 hours.

9. A method as claimed in Claim 8, in which the immersion period in said leaching solution is determined by the attainment of a predetermined degree of color in said solution.

10. A method of making a heat fused silicon nitride product wherein (i) a powder mixture of unpurified silicon and oxygen carrying agents is compacted, (ii) the compact is heated in a nitrogen based atmosphere to react the ingredients of said compact to form a silicon nitride comprising billet having a density of up to 1.4 g/cm³, (iii) heating the billet to a temperature to heat fuse the particles of said billet to form a product having a density of no greater than 2.7 g/cm³, characterised by immersing said billet or compact in one or more leaching solutions prior to step (iii), said immersion in said leaching solutions being for a period of time sufficient to dissolve and separate out impurities present in said billet or compact.

**Patentansprüche**

1. Verfahren zur Herstellung von Siliciumnitridprodukten, bei dem man durch Verdichtung eines Gemischs aus ungereinigtem Siliciumpulver und Sauerstoffträgern einen Vorformling bildet und diesen in einer stickstoffhaltigen Atmosphäre erhitzt, um dessen Bestandteile unter Bildung eines zumindest teilweise nitrierten Barrens mit einer Dichte von höckstens 2,7 g/cm³ zur Reaktion zu bringen, dadurch gekennzeichnet, dass man diesen Barren in einer oder mehreren Stufen in eine oder mehrere Lauglösungen einer Konzentration eintaucht, welche die Entfernung ausgewählter Verunreinigungen bewirkt, und danach diesen Barren unter Heissverschmelzungsbedingungen zur Bildung eines einheitlichen, im wesentlichen vollverdichteten Siliciumnitridprodukts erhitzt.

2. Verfahren nach Anspruch 1, worin dieser Barren als Verunreinigungen nicht umgesetztes Silicium und Eisen enthält und jene Bauglösungen die Entfernung dieser Verunreinigungen bewirken.

3. Verfahren nach Anspruch 1 oder 2, worin jene Sauerstoffträger aus der Y₂O₃, Al₂O₃, SiO₂, MgO, CeO₂, ZrO₂, HfO₂ und andere seltene Erdoxyde umfassenden Gruppe ausgewählt sind.

4. Verfahren nach einem der Ansprüche 1 bis 3, worin mindestens eine jener Lauglösungen eine wässrige Salzsäurelösung ist.

5. Verfahren nach Anspruch 4, worin die Konzentration der Salzsäure in dieser Lösung im Bereich 3—10 Molprozent liegt.

6. Verfahren nach Anspruch 1, worin diese Lauglösungen aus der wässrige Lösungen von Salzsäure, Schwefelsäure, Essigsäure, Oxalsäure und Salpetersäure umfassenden Gruppe ausgewählt sind.

7. Verfahren nach Anspruch 6, worin zusätzlich und getrennt eine zweite, Natriumhydroxyd in 5-molarer Konzentration enthaltende Lösung eingesetzt wird.

8. Verfahren nach einem der vorhergehenden Ansprüche, worin die Eintauchzeit in dieser Lauglösung 6—48 Stunden beträgt.

9. Verfahren nach Anspruch 8, worin die Eintauchzeit in dieser Lauglösung dadurch bestimmt ist, dass ein vorbestimmter Färbungsgrad in dieser Lösung erreicht ist.

10. Verfahren zur Herstellung eines heissverschmolzenen Siliciumnitridprodukts, worin man (i) ein Pulvergemisch aus ungereinigtem Silicium und Sauerstoffträgern verdichtet, (ii) den Pressling in einer stickstoffhaltigen Atmosphäre erhitzt, um dessen Bestandteile unter Bildung eines aus Siliciumnitrid bestehenden Barrens mit einer Dichte bis 1,4 g/cm³ zur Reaktion zu bringen und (iii) den Barren auf eine Temperatur zur Heissverschmelzung von dessen Teilchen unter Bildung eines Produkts mit einer Dichte von höchstens 2,7 g/cm³ erhitzt, dadurch gekennzeichnet, dass man vor der Stufe (iii) diesen Barren oder Pressling in eine oder mehrere Lauglösungen eintaucht, wobei dieses Eintauchen in jene Lauglösungen für genügend lange Zeit erfolgt, um die in diesem Barren oder Pressling vorhandenen Verunreinigungen aufzulösen und abzutrennen.

**Revendications**

1. Un procédé de fabrication de produits de nitrure de silicium qui comprend les étapes suivantes: former une ébauche par compactage d'un mélange de poudre de silicium non-purifié et d'agents porteurs d'oxygène, et chauffer l'ébauche dans une atmosphère à base d'azote pour faire réagir les ingrédients de celle-ci pour former une billette au moins partiellement nitrurée, ayant une masse volumique ne dépassant pas 2,7 g/cm³, caractérisé par l'immersion de ladite billette en une ou plusieurs étapes dans une ou plusieurs solutions de lessivage de concentration efficace pour éliminer des impuretés sélectionnées, et par le chauffage subséquent de ladite billette jusqu'à un état thermofusant pour former un produit de nitrure de silicium unitaire, sensiblement entièrement dense.

2. Un procédé selon la revendication 1, dans lequel ladite billette inclut du silicium non-réagi et du fer en tant qu'impuretés et lesdites solutions de lessivage sont efficaces pour éliminer lesdites impuretés.

3. Un procédé selon la revendication 1 ou 2, dans lequel lesdits agents porteurs d'oxygène sont sélectionnés parmi le groupe constitué de Y₂O₃, Al₂O₃, SiO₂, MgO, CeO₂, ZrO₂, HfO₂ et d'autres oxydes de terres rares.

4. Un procédé selon l'une quelconque des revendications 1 à 3, dans lequel au moins l'une desdites solutions de lessivage est une solution aqueuse d'acide chlorhydrique.

5. Un procédé selon la revendication 4, dans lequel la concentration d'acide chlorhydrique dans ladite solution est comprise dans l'intervalle de 3—10 pour cent molaire.

6. Un procédé selon la revendication 1, dans lequel lesdites solutions de lessivage sont sélectionnées parmi le groupe constitué des solutions aqueuses d'acide chlorhydrique, d'acide sulfurique, d'acide acétique, d'acide oxalique et d'acide nitrique.

7. Un procédé selon la revendication 6, dans lequel on se sert en plus et séparément d'une seconde solution contenant de l'hydroxyde de sodium à une concentration 5 fois molaire.

8. Un procédé selon l'une quelconque des revendications précédentes, dans lequel la période d'immersion dans ladite solution de lessivage et de 6—48 heures.

9. Un procédé selon la revendication 8, dans lequel la période d'immersion dans ladite solution de lessivage est déterminée par l'atteinte d'un degré de couleur prédéterminé dans ladite solution.

10. Un procédé pour fabriquer un produit de nitrure de silicium thermofusé dans lequel (i) un mélange de poudre de silicium non-purifié et d'agents porteurs d'oxygène est soumis à un compactage, (ii) le produit de compactage est chauffé dans une atmosphère à base d'azote pour faire réagir les ingrédients dudit produit de compactage pour former une billette comprenant du nitrure de silicium et ayant une masse volumique pouvant aller jusqu'à 1,4 g/cm$^3$, (iii) on chauffe la billette à une température qui thermofuse les particules de ladite billette pour former un produit ayant une masse volumique ne dépassant pas 2,7 g/cm$^3$, caractérisé en ce que l'on immerge ladite billette ou ledit produit de compactage dans une ou plusieurs solutions de lessivage avant l'étape (iii), ladite immersion dans lesdites solutions de lessivage durant un laps de temps suffisant pour dissoudre et séparer les impuretés présentes dans ladite billette ou ledit produit de compactage.

FIG. 1

FIG. 2